# EUROPÄISCHE PATENTANMELDUNG

(11) **EP 1 432 222 A1**
(43) Veröffentlichungstag der Anmeldung: **23.06.2004**
(21) Anmeldenummer: 02028587.0
(22) Anmeldetag: 20.12.2002
(51) Int. Cl.: H04M 9/08

(54) **Echounterdrückung für komprimierte Spache**

(71) Anmelder: Siemens Aktiengesellschaft, 80333 München (DE); Siemens Mobile Communications S.p.A., 20126 Milano (IT)
(72) Erfinder: Beaugeant, Christophe, 81737 München (DE); Beluffi, Renato, 20092 Cinisello (IT); Fingscheidt, Tim, Dr., 81543 München (DE); Heiss, Herbert, Dr., 82008 Unterhaching (DE); Jäger, Bernd, 81373 München (DE); Prati, Luca, 20092 Cinisello (IT); Taddei, Hervé, Dr., 81543 München (DE)

(57) **Zusammenfassung**

Eine Zeitverzögerung und Qualitätsverschlechterung bei einer Echounterdrückung in von einem Mobilfunkendgerät (2,3) stammenden uplink- Daten wird ermöglicht durch ein Verfahren zur Unterdrückung (10) von Echo (z(t)) in von einem Endgerät (2,3) kommenden uplink- Daten (y(t), 12-16),
wobei downlink- Daten (12-16) und uplink- Daten (19-21) im Original oder in Kopie zur Vorbereitung der Echounterdrückung (10) analysiert werden,
und wobei unter Verwendung der Ergebnisse der Analyse (9) der downlink- Daten (12-16) und der uplink- Daten (19-21) uplink-Daten (19-21) im komprimierten Zustand zur Echoverringerung (10) verändert werden.

## Beschreibung

Die Erfindung betrifft Verfahren und Vorrichtungen zur Unterdrückung von Echo in von einem Endgerät kommenden uplink-Daten.

In unterschiedlichen Telekommunikationsnetzen (insbesondere zellularen Mobilfunknetzen wie GSM, UMTS, 3G, CDMA- basierten und anderen Netzen) kann in von einem Endgerät in Richtung des Mobilfunknetzes gesandten Daten (uplink- Daten) ein "Echo" auftreten, welches dadurch entstehen kann, dass am Endgerät von einem Lautsprecher ausgegebene akustische Signale (welche auf vom Netz an das Endgerät übertragenen downlink- Daten basieren) in mehr oder weniger schwacher Form vom Mikrofon des Endgerätes aufgenommen werden. Das Mikrofon des Endgerätes empfängt also akustische Signale vom das Endgerät benutzenden, aktuell sprechenden (oder das Mobilfunkendgerät in anderer Weise benutzenden) Endgerät-Nutzer und zusätzlich ein schwaches Störgeräusch in Form des vom Lautsprecher des Endgerätes wiedergegebenen (als downlink- Daten vom Netz am Endgerät angekommenen) Anteils (eines Gesprächspartners oder der Umgebung eines Gesprächspartners) des Endgerät-Nutzers. Die vom Mikrofon aufgenommenen Sprachdaten des Endgerät-Nutzers und die zusätzlich vom Mikrofon aufgenommenen (Stör-) Daten die ein Mikrophon im bzw. für das Endgerät aufgenommen hat, werden gemeinsam an den Gesprächspartner des Endgerät-Nutzers übertragen, so dass dieser zusätzlich zu dem Sprachsignal des Endgerät-Nutzers seine eigenen Worte etc als Echo hört (also die Sprachsequenz des Endgerät-Nutzer-Gesprächspartners, welche von diesem zum Lautsprecher des Endgeräts, zum Mikrofon und vom Mikrofon über das Endgerät usw. zurück zum Gesprächspartner übertragen wurden).

Hierfür wurden in Mobilfunknetzen (aus beispielsweise www.etsi.org etc. oder Jacek Biala "Mobilfunk und intelligente Netze", Vieweg-Verlag, ISBN 3-528-15302-4, Seiten 109, 127 und 344 bekannte) Echo-Entzerrer (= Echo Canceller = Echo-Kompensator) vorgeschlagen. In einer Vermittlungseinrichtung eines Mobilfunknetzes kommen die Daten z.B. über ATM-AAL-2 Verbindungen oder andere Verbindungen an, wobei die Daten in einem Mobilfunk-Codec-Format (insbesondere AMR-Format) zur komprimierten Übertragung insbesondere über die Luftschnittstelle codiert sind. Für die Echo-Entzerrung wird die im Codec-Format codierte Sprache (komprimierter Zustand) in ein die Sprache beispielsweise über den Zeitverlauf repräsentierendes Format wie das TDM (Time Devision Multiplex)-Format transcodiert (also hinsichtlich der Codierung umgewandelt) und das in vom Endgerät kommenden uplink- Daten enthaltene Echo (der downlink-Daten) wird durch Berücksichtigung der downlink-Daten in den uplink- Daten möglichst weitgehend verringert (Echo-cancellation). Durch Vermeidung dieses Echos wird die Sprachqualität erheblich verbessert.

Aufgabe der vorliegenden Erfindung ist es, bei einer Verringerung des Echos in von einem Endgerät kommenden uplink- Daten die Verzögerung der Daten aufgrund der Echo-Verringerung (echo-cancellation) möglichst effizient zu optimieren. Die Aufgabe wird jeweils durch die Gegenstände der unabhängigen Ansprüche gelöst.

Indem das Original oder eine Kopie von komprimierten, an das Endgerät zu sendenden Daten (downlink-Daten) und vom Endgerät kommenden Daten (uplink-Daten) jeweils ganz oder teilweise transcodiert werden (in das TDM-Format etc) und diese erhaltenen Daten zur Verringerung des Echos in von Endgerät kommenden (komprimierten), hierfür nicht transcodierten uplink- Daten analysiert werden, wird effizient eine Verzögerung der Daten bei der Echoverringerung vermieden und/ oder eine Verringerung der Sprachqualität durch Transcodierung von vom Endgerät kommenden Daten verringert. Weitere Merkmale und Vorteile der Erfindung ergeben sich aus den Ansprüchen und der nachfolgenden Beschreibung eines Ausführungsbeispiels anhand der Zeichnung. Dabei zeigt:
- Fig. 1: schematisch eine an sich bekannte Entstehung eines Echos,
- Fig. 2: schematisch eine erfindungsgemäße Echoverringerung,
- Fig. 3: die Datenströme bei einer erfindungsgemäßen Echoverringerung.

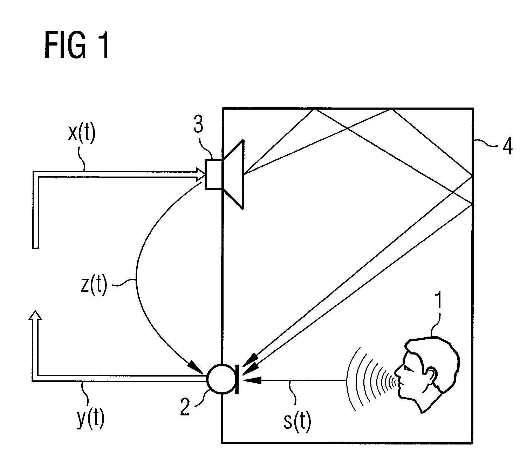

Figur 1 zeigt einen Nutzer 1 eines (nicht dargestellten) hier unter anderem ein Mikrofon 2 und einen Lautsprecher 3 umfassenden Endgerätes welches (2,3) sich z.B. in einem Fahrzeug oder Raum 4 befindet. Der zu seinem Endgerät gehörende (beispielsweise auch über ein Head-Set oder eine Autofreisprecheinrichtung etc mit dem Endgerät verbundene) Lautsprecher 3 empfängt über ein an sich bekanntes, nicht dargestelltes Mobilfunknetz und ein Endgerät akustisch auszugebene downlink- Daten x(t), welche sich in dem Fahrzeug oder Raum 4 ausbreiten und auch als Störgeräusch z(t) vom Mikrofon 2 des Endgerätes (oder für das Endgerät) aufgenommen werden. Das Mikrofon 2 des Endgerätes empfängt also stark oder schwach vom Gesprächspartner des Nutzers 1 abgesandte und vom Lautsprecher 3 ausgegebene (downlink-) Daten sowie vom Nutzer 1 des Endgerätes (2, 3) als Sprache etc. ausgegebene Daten s(t) und überträgt die Summe etc der (vom Lautsprecher 3 ungewollt und vom Nutzer 1 gewollt aufgezeichneten) Daten als uplink-Daten y(t) in an sich bekannter Weise über ein Mobilfunkendgerät, eine Luftschnittstelle u.s.w. zum Mobilfunknetz und weiter zum Gesprächspartner des Teilnehmers 1. Der Gesprächspartner des Teilnehmers 1 nimmt deshalb ein Echo seiner Worte wahr, welches unterdrückt werden soll, da es die Sprachqualität verringert.

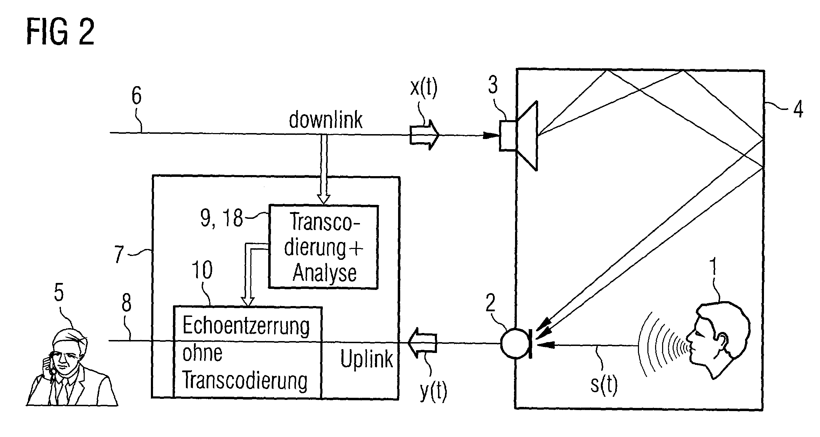

Figur 2 zeigt, wie durch Echo-Unterdrückungseinrichtungen (Echo-Canceller) die vom Gesprächspartner 5 im downlink 6 über ein Mobilfunknetz, eine Luftschnittstelle etc. zu einem Endgerät mit einem Lautsprecher 3 zu übertragenden oder übertragenen downlink- Daten x(t) zur Echo-Verringerung verwendet werden.

Die über den downlink 6 übertragenen downlink- Daten x(t) können kopiert und in Kopie (oder im Original) unabhängig von der Übertragung des Originals (oder der Kopie) in Richtung des Endgerätes 2,3 in einem Echo-Entzerrer 7 ganz oder teilweise transcodiert und analysiert und zur Reduktion (10) des Echos in vom Endgerät 5 stammenden (8) uplink- Daten nach einer Analyse (9) verwendet werden. Entsprechendes gilt für die uplink- Daten.

Erfindungsgemäß werden die zum Endgerät zu sendenden downlink- Daten x(t) (im Original oder ihre Kopie) und vom Endgerät kommende uplink- Daten x(t) (in Kopie oder im Original) (ganz oder teilweise) transcodiert und danach die modifizierten Daten analysiert (9), worauf das Ergebnis der Analyse zur Echoentzerrung verwendet wird. Durch eine Echoverringerung in nicht-transcodierten uplink- Daten wird eine (andernfalls teilweise durch eine Transcodierung bedingte) Verschlechterung der Sprachqualität und/oder eine Verzögerung vermieden. Durch Analyse von downlink- Daten und ein Echo dieser Daten enthaltenden uplink- Daten können Erfahrungswerte gewonnen werden, wie im Detail die uplink-Daten ohne sie (in ein den zeitlichen Verlauf repräsentierendes Format, z.B. das TDM- Format) zu transcodieren nach einer Analyse von transcodierten downlink-Daten verändert werden können, um dabei das Echo der downlink- Daten in den uplink- Daten zu verringern, was in der Regel durch Veränderung einiger Bitwerte in den uplink-Daten, die das Echo von downlink- Daten enthalten möglich ist. Dabei können z.B. vereinfacht Zeitpunkte und Amplituden von akustischen Sequenzen in transcodierten downlink- Daten und Zeitpunkte in den nicht-transcodierten uplink- Daten zusammen mit Erfahrungswerten betreffend Zeitpunkte zu denen in uplink- Daten ein Echo von downlinkdaten eines anderen Zeitpunktes auftritt berücksichtigt werden.

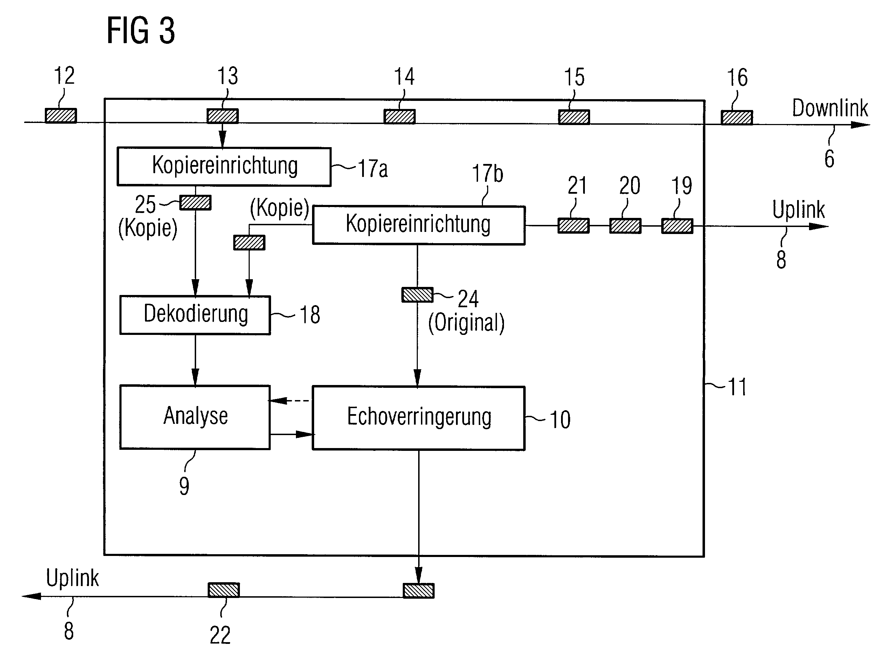

Figur 3 zeigt, wie zu einem Endgerät in einem downlink 6 zu sendende downlink- Daten 12-16 und uplink-Daten 19-21 von einer Kopiereinrichtung 17a, 17b kopiert, im Original oder (wie hier)in Kopie an eine Decodiereinrichtung 18 zur Decodierung (Transcodierung in ein den zeitlichen Verlauf repräsentierendes Format, z.B. das TDM- Format) gesendet werden, worauf sie von einer Analyseeinrichtung 9 analysiert werden, wobei das Ergebnis der Analyse von einer Echoverringerungseinrichtung 10 zur Verringerung des Echos in über einen uplink 8 von einem Endgerät kommenden Daten 19-21 verwendet werden kann, ohne diese uplink- Daten 24 (bzw. alternativ deren Kopie) hierfür zu transcodieren. Die Analyse- Einrichtung (9) analysiert die transcodierten (18) downlink- Daten und uplink- Daten für eine Echoverringerung der uplink-Daten. Die in der Echoverringerungseinrichtung 10 zur Echoverringerung veränderten uplink- Daten 22 werden über den durch den Pfeil 8 angedeuteten uplink weiter in Richtung eines Empfängers über ein oder mehrere Telekommunikationsnetze geleitet.

## Patentansprüche

1. Verfahren zur Unterdrückung (10) von Echo (z(t)) in von einem Endgerät (2,3) kommenden uplink- Daten (y(t), 12-16) ,
wobei downlink- Daten (12-16) und uplink- Daten (19-21) im Original oder in Kopie zur Vorbereitung der Echounterdrückung (10) analysiert werden,
und wobei unter Verwendung der Ergebnisse der Analyse (9) der downlink- Daten (12-16) und der uplink- Daten (19-21) uplink- Daten (19-21) im komprimierten Zustand zur Echoverringerung (10) verändert werden.

2. Verfahren nach Anspruch 1, **dadurch gekennzeichnet,**
**dass** der nicht-transcodierte Zustand die komprimierte Codierung repräsentiert, in welcher die uplink- Daten komprimiert über ein Mobilfunknetz übertragen wurden.

3. Verfahren nach einem der vorhergehenden Ansprüche,
**dadurch gekennzeichnet, dass** die downlink- Daten (12-16) und die uplink-Daten (19-21) vor der Analyse (9) aus dem transcodierten Zustand in einen den Zeitverlauf der von den Daten repräsentierten Signale repräsentierendes Format (z.B. TDM) ganz oder teilweise decodiert (18) werden.

4. Verfahren nach einem der vorhergehenden Ansprüche,
**dadurch gekennzeichnet, dass** zumindest von in Richtung des Endgerätes zu sendenden downlink- Daten (12-16) eine Kopie erstellt (17a, 17b) wird, die Kopie oder das Original der downlink- Daten an das Endgerät gesandt wird, während die anderen downlink- Daten (Original oder Kopie) zur -Decodierung (18) und Analyse (9) zum Ermöglichen der Echoverringerung (10) in den uplink-Daten verwendet wird, wobei nur entweder Kopie oder Original der downlink-Daten decodiert werden.

5. Verfahren nach Anspruch 4,
**dadurch gekennzeichnet, dass** vor der Analyse die downlink- Daten und die uplink- Daten kopiert werden.

6. Verfahren nach einem der vorhergehenden Ansprüche,
**dadurch gekennzeichnet, dass** bei der Echounterdrückung (10) an den uplink- Daten unter Verwendung der Ergebnisse der Analyse (9) der downlink- Daten auch allgemeine Erkenntnisse über Zusammenhänge zwischen downlink- Daten und erforderliche Änderungen in uplink- Daten zur Echoverringerung berücksichtigt werden.

7. Verfahren nach einem der vorhergehenden Ansprüche,
**dadurch gekennzeichnet, dass** das Endgerät (2, 3) ein Mobilfunkendgerät ist.

8. Verfahren nach Anspruch 7, **dadurch gekennzeichnet,**
**dass** das Endgerät ein Mobilfunkendgerät für ein zellulares Mobilfunknetz ist.

9. Verfahren nach einem der vorhergehenden Ansprüche,
**dadurch gekennzeichnet, dass** die Zeitverzögerung durch das teilweise Dekodieren des uplink-Stromes geringer ist als sie bei einer vollständigen Dekodierung des uplink-Stromes, anschließenden Echounterdrückung und anschließenden Rück-Codierung wäre.

10. Vorrichtung (11) zur Echoverringerung,
insbesondere zur Durchführung des Verfahrens nach einem der vorhergehenden Ansprüche,
- mit einer Dekodier- Einrichtung (18) zur Transcodierung von an ein Endgerät gesendeten oder zu sendenden downlink- Daten und von von einem Endgerät kommenden uplink-Daten in ein den Zeitverlauf der von den Daten repräsentierten Signale repräsentierendes Format (z.B. TDM),
- mit einer Analyse- Einrichtung (9) zur Analyse der transcodierten (18) Daten für eine Echoverringerung von uplink-Daten,
- mit einer Echoverringerungs- Einrichtung (10) zur Verringerung des Echos in von einem Endgerät kommenden, sich im nicht-transcodierten Zustand befindenden uplink-Daten.
